# EUROPÄISCHE PATENTSCHRIFT

(11) **EP 2 722 551 B1**
(45) Veröffentlichungstag und Bekanntmachung des Hinweises auf die Patenterteilung: **04.01.2017**
(21) Anmeldenummer: 13189163.2
(22) Anmeldetag: 17.10.2013
(51) Int. Cl.: F16D 65/12, F16D 55/38

(54) **Haltebremse, Antriebseinrichtung für eine Presse und Presse**
Mechanical brake, drive device for a press and press
Frein d'arrêt, dispositif d'entraînement pour une presse et presse

(30) Priorität: 19.10.2012 DE 102012020530
(43) Veröffentlichungstag der Anmeldung: 23.04.2014
(73) Patentinhaber: Desch Antriebstechnik GmbH & Co. KG, 59759 Arnsberg (DE)
(72) Erfinder: Thomas Reinartz, 45549 Sprockhövel (DE); Sebastian Esch, 59427 Unna (DE)
(74) Vertreter: Brune, Axel

(56) Entgegenhaltungen:
- EP-A1- 0 896 165
- DE-A1- 10 121 433
- GB-A- 2 120 332
- US-A- 1 791 685

## Beschreibung

Die vorliegende Erfindung betrifft eine Antriebseinrichtung gemäß dem Oberbegriff des Anspruchs 1, sowie eine Presse gemäß dem Oberbegriff des Anspruchs 10. Sogenannte Haltebremsen oder auch Sicherheitsbremsen werden beispielsweise in Antriebseinrichtungen für mechanische Pressen eingesetzt und dienen im Wesentlichen dazu, den Pressenstößel sicher in einer Position zu halten, wenn die Presse beispielsweise gewartet oder repariert wird.

Eine Haltebremse umfasst dabei Innen- und Außenscheiben, die in einem sogenannten Lamellenpaket zusammengefasst sind. Im Wesentlichen handelt es sich hierbei um kreisrunde Scheiben, die abwechselnd mit dem Innen- bzw. Außenteil der Haltebremse verbunden sind. In der Regel ist zwischen den Innen- bzw. Außenscheiben und dem Außenteil- bzw. Innenmitnehmer eine sogenannte Schiebeverzahnung vorgesehen, die eine axiale Verschiebung bei gleichzeitiger Drehmomentübertragung ermöglicht. Durch Zusammendrücken des Lamellenpaketes wird die Haltebremse aktiviert. Durch Wegfall dieser Andruckkraft wird die Haltbremse gelöst. So eine Bremse geht z.B. aus EP-A-0 896 165 hervor.

In der Regel werden in derartigen Haltebremsen Innen- und Außenscheiben als Metall, insbesondere Stahl, verbaut. Die Reibflächen der Außenscheiben werden in der Regel mit einem gesinterten, metallischen Reibmaterial, sogenannter Sinterbronze, beschichtet. Die Gegenreibfläche der Innenscheiben sind in der Regel metallisch blank.

An den Verzahnungen der Scheiben zu den jeweiligen Verzahnungen von Innen- und Außenteil kommt es zu metallischem Kontakt. Durch äußere Anregung, beispielsweise Vibrationen, Drehschwingungen, kommt es aufgrund des konstruktionsbedingten Spiels zwischen den sich in Eingriff befindlichen Verzahnungen zum Aufeinanderschlagen der Zahnflanken.

Hierbei werden kleinste Partikel aus den Oberflächen gelöst, welche schnell oxidieren. Hierdurch kommt es zu weiterer Reibkorrosion und Abtragung der Zahnflanken, was schließlich zum Ausfall der Verzahnung bzw. der kompletten Bremse führen kann, beispielsweise durch Reibkorrosion und/oder Passungsrost.

Hier setzt die vorliegende Erfindung an und macht es sich zur Aufgabe eine verbesserte Antriebseinrichtung bereitzustellen, insbesondere eine Haltebremse vorzuschlagen, bei der die Reibkorrosionsgefahr ausgeschlossen, mindestens aber vermindert ist.

Erfindungsgemäß wird diese Aufgabe durch eine Antriebseinrichtung mit den kennzeichnenden Merkmalen des Anspruchs 1 gelöst. Dadurch, dass mindestens eine der Verzahnungen aus einem nichtmetallischen Werkstoff gebildet ist, kann eine verbesserte Haltebremse bereitgestellt werden, insbesondere eine Haltebremse, bei der reibkorrosionsbedingte Ausfälle vermieden, zumindest aber reduziert werden können.

Weitere vorteilhafte Ausgestaltungen ergeben sich insbesondere aus den Unteransprüchen, wobei die Merkmale der Unteransprüche grundsätzlich beliebig miteinander kombiniert werden können.

In einer vorteilhaften Ausgestaltung kann vorgesehen sein, dass die Verzahnung der Außenscheibe und/oder die Verzahnung der Innenscheibe aus einem nichtmetallischen Werkstoff gebildet ist. Grundsätzlich ist es möglich, nur die Verzahnung als solches aus einem nichtmetallischen Werkstoff auszubilden und den Rest der Scheibe aus Stahl zu fertigen. In diesem Zusammenhang ist es beispielsweise ebenfalls möglich, nur die Verzahnung der Außenscheiben bzw. nur die Verzahnung der Innenscheiben aus einem nichtmetallischen Werkstoff zu fertigen um beispielsweise nur die potentiell von Reibkorrosion betroffenen Stellen aus einem nichtmetallischen Werkstoff herzustellen.

In einer weiteren vorteilhaften Ausgestaltung kann vorgesehen sein, dass die Verzahnung des Außenteils und/oder der Verzahnung des Innenmitnehmers aus einem nichtmetallischen Werkstoff gebildet ist. Auch durch diese Maßnahme kann ein selektiver Einsatz des nichtmetallischen Werkstoffs erreicht werden, wodurch beispielsweise der Einsatz von nichtmetallischem Werkstoff auf die Stellen mit der potentiell größten Gefahr der Reibkorrosion beschränkt sein kann.

In einer weiteren vorteilhaften Ausgestaltung kann vorgesehen sein, dass der nichtmetallische Werkstoff ein harzgebundenes, nichtmetallisches Textilmaterial umfasst, insbesondere aus diesem gebildet ist.

In einer weiteren vorteilhaften Ausgestaltung kann vorgesehen sein, dass die Außenscheibe einen kreisrunden Träger mit Seitenflächen und einer zentralen Öffnung umfasst, wobei der Reibbelag auf mindestens einer Seitenfläche zumindest abschnittsweise aufgebracht ist und die Verzahnung am Rand des Trägers angeordnet ist. Eine derartige Außenscheibe ist einer herkömmlichen Außenscheibe insbesondere hinsichtlich ihrer Form und Funktion nachgebildet, wobei beispielsweise die Verzahnung einstückig aus dem Träger bzw. dem Trägermaterial hergestellt sein kann. Auf den Seitenflächen können grundsätzlich beliebige Reibbeläge aufgebracht sein, wobei die Außenscheibe bevorzugt mit einem Stahlblech bzw. Stahlblechen ausgestattet ist. Das bzw. die Stahlbleche dienen dann als Reibfläche bzw. Anlagefläche für den Belag der Innenscheibe in einem Haltezustand der Haltebremse. Durch die Ausgestaltung der Außenscheibe gewissermaßen als Verbund von Träger und Belag können die Anforderungen an eine Außenscheibe in einer Haltebremse optimal eingestellt werden.

In einer weiteren vorteilhaften Ausgestaltung kann vorgesehen sein, dass die Innenscheibe einen kreisrunden Träger mit Seitenflächen und einer zentralen Öffnung umfasst, wobei der Reibbelag auf mindestens einer Seitenfläche zumindest abschnittsweise aufgebracht ist und die Verzahnung am Rand der Öffnung angeordnet ist. Eine derartige Innenscheibe ist einer herkömmlichen Innenscheibe insbesondere hinsichtlich ihrer Form und Funktion nachgebildet, wobei beispielsweise die Verzahnung einstückig aus dem Träger bzw. dem Trägermaterial hergestellt sein kann. Auf den Seitenflächen können grundsätzlich beliebige Reibbeläge aufgebracht sein, wobei die Innenscheibe bevorzugt mit einem organischen Belag ausgestattet ist. Der organische Belag dient dann als Reibfläche bzw. Anlagefläche für den Belag der Außenscheibe in einem Haltezustand der Haltebremse. Durch die Ausgestaltung der Innenscheibe gewissermaßen als Verbund von Träger und Belag können die Anforderungen an eine Innenscheibe in einer Haltebremse optimal eingestellt werden.

In einer weiteren vorteilhaften Ausgestaltung kann vorgesehen sein, dass der Reibbelag der Außenscheibe und/oder der Innenscheibe aus einem oder mehreren Stahlblechen gebildet wird. Diese Maßnahme bietet sich insbesondere dann an, wenn eine Ausgestaltung der Scheibe aus einem Träger und einem Reibbelag gewählt wird. Der Träger bildet dann im Wesentlichen die Form einer üblichen Innen- bzw. Außenscheibe nach, lässt jedoch ein wenig Raum für einen Reibbelag aus einem anderen Material als der Träger. Insofern kann ein derart ausgestalteter Träger beispielsweise komplett aus HGW hergestellt sein und je nach Verwendungszweck mit Stahlblechen oder auch anderen Materialien als Reibbelag an den entsprechenden Stellen beaufschlagt, insbesondere beklebt werden.

In einer weiteren vorteilhaften Ausgestaltung kann vorgesehen sein, dass der Reibbelag der Innenscheibe und/oder der Außenscheibe aus einem organischen Reibbelag gebildet wird. Diese Maßnahme bietet sich insbesondere dann an, wenn eine Ausgestaltung der Scheibe aus einem Träger und einem Reibbelag gewählt wird. Der Träger bildet dann im Wesentlichen die Form einer üblichen Innen- bzw. Außenscheibe nach, lässt jedoch ein wenig Raum für einen Reibbelag aus einem anderen Material als der Träger. Insofern kann ein derart ausgestalteter Träger beispielsweise komplett aus HGW hergestellt sein und je nach Verwendungszweck mit einem organischen Reibbelag oder auch anderen Materialien als Reibbelag an den entsprechenden Stellen ausgestattet werden.

In einer weiteren vorteilhaften Ausgestaltung kann vorgesehen sein, dass das Betätigungsmittel ein Betätigungselement und einen Anschlag umfasst. Das Betätigungselement umfasst im Wesentlichen einen axial verschiebbaren Kolben, einen Zylinderraum und eine Federanordnung umfasst, wobei die Innenscheiben und die Außenscheiben zwischen dem Kolben und dem Anschlag angeordnet sind, wobei die Federanordnung dazu eingerichtet ist, den Kolben in Richtung der Innenscheiben und Außenscheiben zu drücken, wobei die Anordnung aus Kolben und Zylinderraum dazu eingerichtet ist, den Kolben gegen die Kraft der Federanordnung zu verschieben. Über eine derartige Anordnung kann beispielsweise eine Nothaltefunktion der Haltebremse realisiert werden, da bei fehlender Ansteuerung des Kolbens, beispielsweise durch Luft oder Hydrauliköl, die Federanordnung stets die Haltebremse aktiviert, sprich die Anordnung aus Innenscheiben und Außenscheiben zusammendrückt. Alternativ kann das Betätigungselement auch elektrisch, beispielsweise über einen Elektromagneten, oder rein mechanisch, beispielsweise über einen manuell bedienbaren Hebel, ausgestaltet sein.

Eine weitere Aufgabe der Erfindung liegt darin, eine verbesserte mechanische Presse gemäß dem Oberbegriff des Anspruchs 10 vorzuschlagen, insbesondere eine mechanische Presse, deren mit einer Haltebremse ausgestattete Antriebseinrichtung weniger reibkorrosionsanfällig ist.

Erfindungsgemäß wird diese Aufgabe durch eine mechanische Presse mit den kennzeichnenden Merkmalen des Anspruchs 10 gelöst.

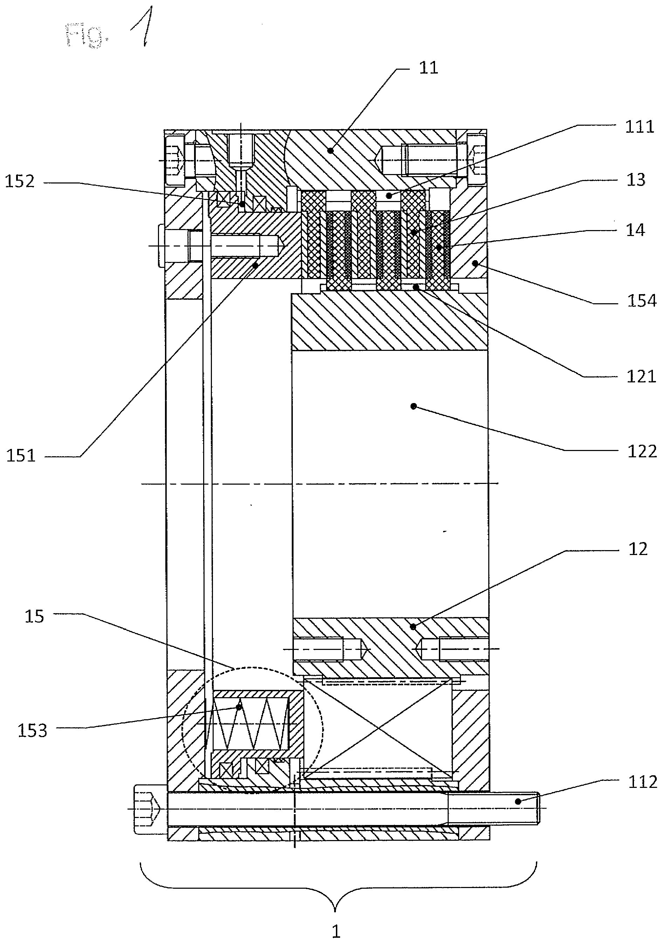

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Haltebremse in einer Schnittdarstellung;

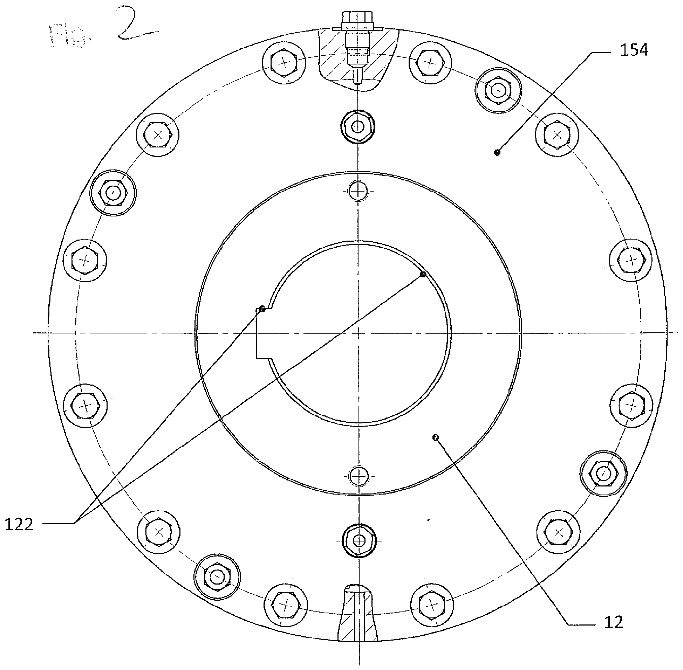

- Fig. 2: eine Haltebremse in einer Ansicht von vorne;

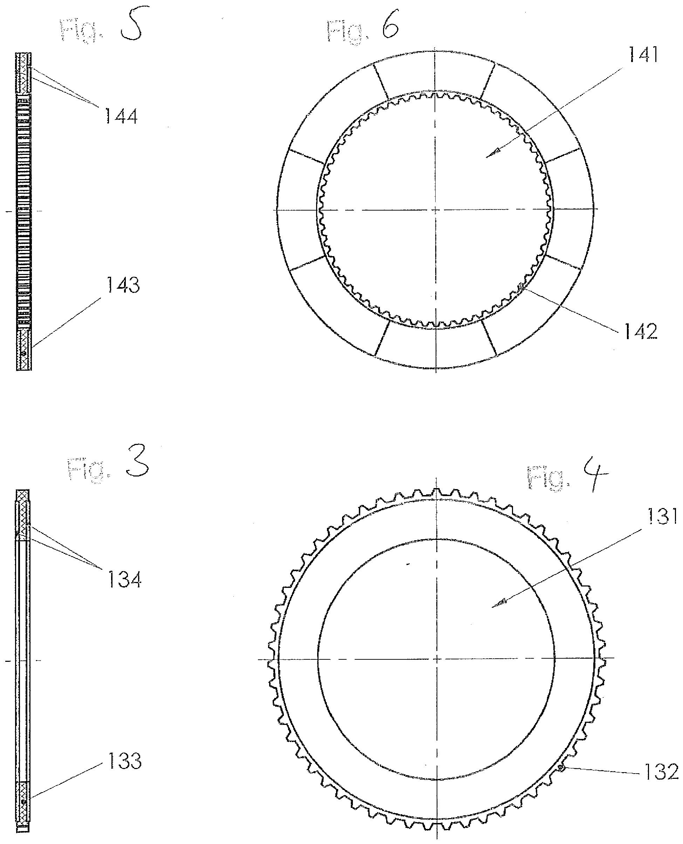

- Fig. 3: eine Außenscheibe für eine Haltebremse in einer Schnittansicht;
- Fig. 4: eine Außenscheibe für eine Haltebremse in einer Draufsicht;
- Fig. 5: eine Innenscheibe für eine Haltebremse in einer Schnittansicht;
- Fig. 6: eine Innenscheibe für eine Haltebremse in einer Draufsicht;
- Fig. 7: eine erfindungsgemäße Antriebseinrichtung in einer Schnittdarstellung;
- Fig. 8: eine erfindungsgemäße Presse in einer schematischen Darstellung.

Folgende Bezugszeichen werden in den Abbildungen verwendet:
- 1: Haltebremse
- 2: Servomotor
- 3: Getriebe
- 4: Exzenterwelle
- 5: Stößel
- 6: Gestell
- 7: Pressentisch

- 11: Außenteil
- 12: Innenmitnehmer
- 13: Außenscheibe
- 14: Innenscheibe
- 15: Betätigungselement

- 111: Innenverzahnung
- 112: Anschlusseinrichtung

- 121: Außenverzahnung
- 122: Wellenanschluss

- 131: Öffnung
- 132: Außenverzahnung
- 133: Träger
- 134: Stahlblech

- 141: Öffnung
- 142: Innenverzahnung
- 143: Träger
- 144: Organischer Reibbelag
- 151: Kolben
- 152: Zylinderraum
- 153: Federanordnung
- 154: Deckel / Anschlag

Eine Haltebremse 1 umfasst im Wesentlichen ein innenverzahntes Außenteil 11, einen außenverzahnten Innenmitnehmer 12, mindestens eine Außenscheibe 13, mindestens eine Innenscheibe 14 und ein Betätigungsmittel.

Das Innenverzahnte Außenteil 11 mit einem kreisförmigen Querschnitt, welches auch als Zahnkranz angesprochen werden kann, ist in der Regel hohlzylinderförmig ausgestaltet, mit einer Innenverzahnung 111, einer sogenannten Schiebeverzahnung ausgestattet, und weist eine Anschlusseinrichtung 112 auf. In der Regel wird das Außenteil 11 über die Anschlusseinrichtung 112 an einem Gehäuse, beispielsweise einer Antriebseinrichtung, festgelegt. Das auf die Haltebremse 1 einwirkende Drehmoment kann über diese Anschlusseinrichtung 112 an das Gehäuse oder eine andere feststehende Einrichtung abgegeben werden.

Der Innenmitnehmer 12 ist in der Regel ebenfalls hohlzylinderförmig ausgestaltet, weist einen kreisförmigen Querschnitt und einen Wellenanschluss 122 auf. Ferner weist der Innenmitnehmer 12 eine Außenverzahnung 121, eine sogenannte Schiebeverzahnung, auf. Der Innenmitnehmer 12 ist in dem Außenteil 11 angeordnet. In der Regel weisen Innenmitnehmer 12 und Außenteil 11 eine gemeinsame Dreh- und insbesondere auch Symmetrieachse auf.

Die Außenscheiben 13 und Innenscheiben 14 sind axial der Bremse in der abwechselnden Reichenfolge Innenscheibe / Außenscheibe zwischen dem Außenteil 11 und dem Innenmitnehmer 12 angebracht. Vorzugsweise weist die Haltebremse 1 eine Anzahl von Innen- und Außenscheiben auf.

Die Außenscheibe 13 ist in der Regel als kreisrunde Scheibe ausgestaltet und weist eine zentrale Öffnung 131 und eine Außenverzahnung 132 am Rand der Außenscheibe 13 auf.

Die Innenscheibe 14 ist in der Regel als kreisrunde Scheibe ausgestaltet und weist eine zentrale Öffnung 141 und eine Innenverzahnung 142 am Rand der Öffnung 141 auf.

Die Außenverzahnung 132 der Außenscheibe 13 greift in die Innenverzahnung 111 des Außenteils 11 ein. Die Innenverzahnung 142 der Innenscheibe 14 greift in die Außenverzahnung 121 des Innenmitnehmers 12 ein. Hierdurch sind die Innenscheiben 14 drehfest, jedoch axial verschiebbar mit dem Innenmitnehmer 12 und die Außenscheiben 13 drehfest, jedoch axial verschiebbar mit dem Außenteil 11 über die jeweiligen Schiebeverzahnungen verbunden. Die Außen- und Innenscheiben weisen einander zugewandte Reibflächen auf.

Das sich ergebende Paket aus Außenscheiben 13 und Innenscheiben 14 ist zwischen dem Betätigungsmittel 15 angeordnet, mit dem die Innen- und Außenscheiben in axialer Richtung zusammengedrückt oder freigegeben, sprich nicht zusammengedrückt werden können.

Das Betätigungsmittel umfasst im Wesentlichen ein Betätigungselement 15 und einen Anschlag 154. Das Betätigungselement umfasst im Wesentlichen einen axial verschiebbaren Kolben 151, einen Zylinderraum 152 und eine Federanordnung 153, umfassend beispielsweise mehrere Federn. Weitere Details der vorliegenden Erfindung ergeben sich insbesondere aus einer näheren Beschreibung der Funktion der Haltebremse.

In einem Haltezustand drücken die Federn der Federanordnung 153 den Kolben 151 in Richtung des als Anschlag dienenden Deckels 154. Das zwischen dem Kolben 151 und dem Anschlag 154 angeordnete Paket aus Außen- und Innenscheiben wird entsprechend zusammengedrückt und die Haltebremse bremst.

Soweit der Zylinderraum 152 mit einem Medium, beispielsweise Luft oder Öl, unter einem bestimmten Druck beaufschlagt wird, wird der Kolben 151 gegen die Federkraft von dem Anschlag 154 wegbewegt, wodurch die Außen- und Innenscheiben nicht länger zusammengedrückt werden und die Haltebremse 1 gelöst wird.

Erfindungsgemäß ist vorgesehen, dass mindestens eine der Verzahnungen 111, 121, 132, 142, vorzugsweise die Verzahnungen 132, 142 der Innen- und/oder Außenscheiben, aus einem nichtmetallischen Material gebildet sind. Als Material kommt ein Hartgewebe, abgekürzt HGW, in Frage. Bei einem Hartgewebe handelt es sich im Wesentlichen um ein harzgebundenes, nichtmetallisches Textilmaterial.

Es ist vorzugsweise vorgesehen, dass mindestens eine Innenscheibe 14 und/oder mindestens eine Außenscheibe 13 einen Träger 133, 143 und mindestens einen Belag umfassen, sprich als Verbundscheibe ausgeführt ist.

Der Träger 133, 143 sowohl der Innenscheibe als auch der Außenscheibe ist im Wesentlichen als kreisrunde Scheibe mit zwei Seitenflächen und einer Öffnung 131, 141 in der Mitte ausgebildet. Der Träger 133, 143 ist vorzugsweise vollständig aus einem nichtmetallischen Material, insbesondere einem Hartgewebe, ausgebildet. Der Träger kann auch noch weitere Materialien, neben dem Hartgewebe enthalten.

Der Träger 133 der Außenscheibe 13 ist mit einer entsprechenden Verzahnung 132 am Rand des Trägers 133 ausgestattet, wohingegen die Öffnung 131 in der Regel nicht verzahnt ist. Hier wird die Verzahnung 132 vorzugsweise aus dem Trägermaterial gebildet, insbesondere einstückig.

Der Träger 143 der Innenscheibe 14 ist mit einer entsprechenden Verzahnung 142 auf der Innenseite der Öffnung 141 ausgestattet. In der Regel ist der Träger 143 am Rand glatt ausgestaltet. Die Verzahnung 142 wird in der Regel ebenfalls aus dem Trägermaterial gebildet, insbesondere einstückig.

Es ist ferner vorgesehen, dass der Träger 133 der Außenscheibe 13 und/oder der Innenscheibe 14auf seinen Seitenflächen oder zumindest einer Seitenfläche mit einem Stahlblech 134 als Belag ausgestattet ist. Vorzugsweise ist die Seitenfläche in Umfangsrichtung vollständig mit einem Stahlblech 134 ausgestattet. In radialer Richtung kann die Seitenfläche vollständig, aber auch nur abschnittsweise mit einem Stahlblech 134 ausgestattet sein. Das Stahlblech 134 wird vorzugsweise geklebt, wobei auch weitere Verfahren zur Befestigung in Frage kommen.

Es ist ferner vorgesehen, dass der Träger 143 der Innenscheibe 14 und/oder der Außenscheibe 13 auf seinen Seitenflächen oder zumindest einer Seitenfläche mit einem organischen Reibbelag 144 als Belag ausgestattet ist. Vorzugsweise ist die Seitenfläche in Umfangsrichtung vollständig mit einem organischen Reibbelag 144 ausgestattet. In radialer Richtung kann die Seitenfläche vollständig, aber auch nur abschnittsweise mit dem organischen Reibbelag 144 ausgestattet sein. Der organische 144 Belag wird vorzugsweise geklebt, wobei auch weitere Verfahren zur Befestigung in Frage kommen. Organische Reibbeläge bestehen in der Regel aus organisch, d.h. kautschuk- und/oder harzgebundenen Fasern unterschiedlichster Art (früher zumeist Asbest) sowie verschiedenen Zusatzstoffen (z.B. Metallpartikel) zur Optimierung des gewünschten Reibverhaltens.

Die Kombination aus Träger und Belag ist in ihrer Form und Funktion grundsätzlich einer üblichen Innenscheibe bzw. Außenscheibe nachgebildet, weist jedoch insbesondere im Hinblick auf die Verhinderung bzw. Reduzierung von Reibkorrosion erhebliche Vorteile auf.

Wie bereits oben dargelegt sind sowohl die Innenscheiben 14 als auch die Außenscheiben 13 vorzugsweise als Verbundscheiben ausgestaltet, sprich sie umfassen einen Träger inklusive Verzahnung aus einem nichtmetallischen Material und jeweils einen separaten Reibbelag aus Stahlblech oder einem organischen Material. Grundsätzlich denkbar ist aber auch, dass beispielsweise nur die Innenscheiben 14 oder nur die Außenscheiben 13 auf diese Weise aufgebaut sind. Die Außenscheiben 13 können beispielsweise in herkömmlicher Art und Weise aus Stahl aufgebaut sein, während die Innenscheiben 14 in der skizzierten Verbundbauweise mit organischen Reibbelägen 144 aufgebaut sind. Wichtig ist nur, dass stets Stahl auf einem organischen Reibbelag reibt. Mit der letzteren Kombination aus Stahlscheiben und Verbundscheiben kann beispielsweise Bauraum eingespart werden, da Stahlscheiben in der Regel eine größere Festigkeit als HGW aufweist und insofern dünner bei gleicher zu erwartender Belastung ausgeführt sein können. Der Reibbelag ist dann aus dem Scheibenmaterial selbst gebildet, sprich aus Stahl. Erwähnenswert ist selbstverständlich die Möglichkeit, auch nur die Verzahnung der ansonsten aus Stahl bestehenden Scheibe aus einen nichtmetallischen Material, insbesondere HGW, auszuführen.

Die Außen- und Innenscheiben sind vorzugsweise wechselweise geschichtet, sprich Außen- und Innenscheiben sind immer abwechselnd angeordnet (Innen - Außen - Innen - Außen - usw.).

Im Ergebnis ergibt sich insbesondere eine hydraulisch gelüftete Federdruck-Lamellenbremse als statische Haltebremse mit Notstoppfunktion. Die Notstopfunktion wird mit der Federanordnung realisiert, die bei Ausfall des Drucks die Bremse aktiviert.

Als bevorzugter Einsatzbereich der Haltebremse kommt unter anderem eine servomotorisch angetriebene mechanische Presse in Frage. Auch kommt eine Anwendung generell als statische Haltebremse, als auch als dynamische Betriebsbremse in Frage.

Eine ebenfalls erfindungsgemäße Antriebseinrichtung für eine mechanische Presse umfasst im Wesentlichen ein Antriebsmittel 2, beispielsweise einen Servomotor, ein Getriebe 3 und eine erfindungsgemäße Haltebremse 1.

Eine ebenfalls erfindungsgemäße mechanische Presse umfasst im Wesentlichen ein Gestell 6, einen Stößel 5, einen Pressentisch 7 und eine erfindungsgemäße Antriebseinrichtung.

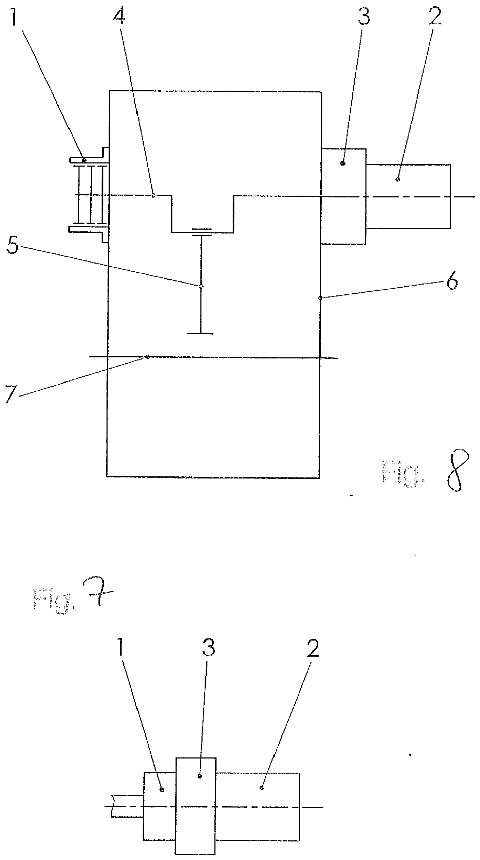

Die Antriebseinrichtung kann einerseits kompakt, wie in Fig. 7 dargestellt aufgebaut sein, sprich Antriebsmittel 2, Getriebe 3 und Haltebremse 1 bilden eine Einheit. Andererseits können die Komponenten der Antriebseinrichtung auch an der Presse verteilt angebracht sein, wie beispielsweise in Fig. 8 dargestellt, beispielweise Antriebsmittel 2 und Getriebe 3 auf der einen Seite der Exzenterwelle 4 und die Haltebremse 1 auf der anderen Seite.

## Patentansprüche

1. Antriebseinrichtung für eine mechanische Presse, umfassend ein Antriebsmittel (2), beispielsweise einen Servomotor, ein Getriebe (3) und eine Haltebremse (1), **gekennzeichnet durch** eine Haltebremse (1), umfassend mindestens
- ein Außenteil (11) mit einer Innenverzahnung (111), sowie einen Innenmitnehmer (12) mit einer Außenverzahnung (121),
- mindestens eine Außenscheibe (13) mit einer Außenverzahnung (131) sowie mindestens eine Innenscheibe (14) mit einer Innenverzahnung (141), wobei
- die Innenverzahnung (141) der Innenscheibe (14) mit der Außenverzahnung (121) des Innenmitnehmers (12) in Eingriff steht und die Außenverzahnung (131) der Außenscheibe (13) mit der Innenverzahnung (111) des Außenteils (11) in Eingriff steht, wobei
- die Innenscheibe (14) mindestens einen der benachbarten Außenscheibe (13) zugewandten Reibbelag und die Außenscheibe (13) mindestens einen der benachbarten Innenscheibe (14) zugewandten Reibbelag aufweist, wobei
- ein Betätigungsmittel vorgesehen ist, welches dazu eingerichtet ist die mindestens eine Innenscheibe (14) und die mindestens eine Außenscheibe (15) wahlweise zusammenzudrücken oder nicht zusammenzudrücken, wobei mindestens eine der Verzahnungen (111, 121, 131, 141) aus einem nichtmetallischen Werkstoff gebildet ist.

2. Antriebseinrichtung für eine mechanische Presse nach Anspruch 1, **dadurch gekennzeichnet, dass** die Verzahnung (131) der Außenscheibe (13) und/oder die Verzahnung (141) der Innenscheibe (14) aus einem nichtmetallischen Werkstoff gebildet ist.

3. Antriebseinrichtung für eine mechanische Presse nach mindestens einem der vorhergehenden Ansprüche, **dadurch gekennzeichnet, dass** die Verzahnung (111) des Außenteils (11) und/oder der Verzahnung (121) des Innenmitnehmers (12) aus einem nichtmetallischen Werkstoff gebildet ist.

4. Antriebseinrichtung für eine mechanische Presse nach mindestens einem der vorhergehenden Ansprüche, **dadurch gekennzeichnet, dass** der nichtmetallische Werkstoff ein harzgebundenes, nichtmetallisches Textilmaterial umfasst, insbesondere aus diesem gebildet ist.

5. Antriebseinrichtung für eine mechanische Presse nach mindestens einem der vorhergehenden Ansprüche, **dadurch gekennzeichnet, dass** die Außenscheibe (13) einen kreisrunden Träger (133) mit Seitenflächen und einer zentralen Öffnung (131) umfasst, wobei der Reibbelag auf mindestens einer Seitenfläche zumindest abschnittsweise aufgebracht ist und die Verzahnung (132) am Rand des Trägers (133) angeordnet ist.

6. Antriebseinrichtung für eine mechanische Presse nach mindestens einem der vorhergehenden Ansprüche, **dadurch gekennzeichnet, dass** die Innenscheibe (14) einen kreisrunden Träger (143) mit Seitenflächen und einer zentralen Öffnung (141) umfasst, wobei der Reibbelag auf mindestens einer Seitenfläche des Trägers (143) zumindest abschnittsweise aufgebracht ist und die Verzahnung (142) am Rand der Öffnung (141) angeordnet ist.

7. Antriebseinrichtung für eine mechanische Presse nach mindestens einem der vorhergehenden Ansprüche, **dadurch gekennzeichnet, dass** der Reibbelag der Außenscheibe (13) und/oder der Innenscheibe (14) aus einem oder mehreren Stahlblechen (134) gebildet wird.

8. Antriebseinrichtung für eine mechanische Presse nach mindestens einem der vorhergehenden Ansprüche, **dadurch gekennzeichnet, dass** der Reibbelag der Innenscheibe (14) und/oder der Außenscheibe (13) aus einem organischen Reibbelag (144) gebildet wird.

9. Antriebseinrichtung für eine mechanische Presse nach mindestens einem der vorhergehenden Ansprüche, **dadurch gekennzeichnet, dass** das Betätigungsmittel ein Betätigungselement (15) und einen Anschlag (154) umfasst, wobei das Betätigungselement (15) einen axial verschiebbaren Kolben (151), einen Zylinderraum (152) und eine Federanordnung (153) umfasst, wobei die Außenscheiben (13) und die Innenscheiben (14) zwischen dem Kolben (151) und dem Anschlag (154) angeordnet sind, wobei die Federanordnung (153) dazu eingerichtet ist, den Kolben (151) in Richtung der Außenscheiben (13) und Innenscheiben (14) zu drücken, wobei die Anordnung aus Kolben (151) und Zylinderraum (152) dazu eingerichtet ist, den Kolben (151) gegen die Kraft der Federanordnung (153) zu verschieben.

10. Mechanische Presse, umfassend mindestens ein Gestell (6), einen Stößel (5), einen Pressentisch (7) und eine Antriebseinrichtung gemäß mindestens einem der Ansprüche 1 bis 9.

## Claims

1. Drive device for a mechanical press, comprising a drive means (2), for example a servomotor, a gearbox (3), and a holding brake (1), **characterized by** a holding brake (1) comprising at least
- one external part (11) having an internal toothing (111), and an internal entrainment element (12) having an external toothing (121);
- at least one external disc (13) having an external toothing (131), and at least one internal disc (14) having an internal toothing (141), wherein
- the internal toothing (141) of the internal disk (14) engages with the external toothing (121) of the internal entrainment element (12), and the external toothing (131) of the external disc (13) engages with the internal toothing (111) of the external part (11), wherein
- the internal disc (14) has at least one friction lining that faces the adjacent external disc (13), and the external disc (13) has at least one friction lining that faces the adjacent internal disc (14), wherein
- an activation means which is adapted for selectively mutually compressing or not mutually compressing the at least one internal disc (14) and the at least one external disc (15) is provided,
wherein at least one of the toothings (111, 121, 131, 141) is formed from a non-metallic material.

2. Drive device for a mechanical press, according to Claim 1, **characterized in that** the toothing (131) of the external disc (13) and/or the toothing (141) of the internal disc (14) are/is formed from a non-metallic material.

3. Drive device for a mechanical press, according to at least one of the preceding claims, **characterized in that** the toothing (111) of the external part (11) and/or the toothing (121) of the internal entrainment element (12) are/is formed from a non-metallic material.

4. Drive device for a mechanical press, according to at least one of the preceding claims, **characterized in that** the non-metallic material comprises a resin-bonded non-metallic textile material, in particular is formed from the latter.

5. Drive device for a mechanical press, according to at least one of the preceding claims, **characterized in that** the external disc (13) comprises a circular support (133) having lateral faces and a central opening (131), wherein the friction lining is applied at least in portions to at least one lateral face and the toothing (132) is disposed on the periphery of the support (133).

6. Drive device for a mechanical press, according to at least one of the preceding claims, **characterized in that** the internal disc (14) comprises a circular support (143) having lateral faces and a central opening (141), wherein the friction lining is applied at least in portions to at least one lateral face of the support (143) and the toothing (142) is disposed on the periphery of the opening (141).

7. Drive device for a mechanical press, according to at least one of the preceding claims, **characterized in that** the friction lining of the external disc (13) and/or of the internal disc (14) is formed from one or a plurality of steel panels (134).

8. Drive device for a mechanical press, according to at least one of the preceding claims, **characterized in that** the friction lining of the internal disc (14) and/or of the external disc (13) is formed from an organic friction lining (144).

9. Drive device for a mechanical press, according to at least one of the preceding claims, **characterized in that** the activation means comprises an activation element (15) and a stop (154), wherein the activation element (15) comprises an axially displaceable piston (151), a cylinder space (152), and a spring assembly (153), wherein the external discs (13) and the internal discs (14) are disposed between the piston (151), and the stop (154), wherein the spring assembly (153) is adapted for pushing the piston (151) in the direction of the external discs (13) and internal discs (14), wherein the assembly of the piston (151) and the cylinder space (152) is adapted for displacing the piston (151) counter to the force of the spring assembly (153).

10. Mechanical press comprising at least a frame (6), a ram (5), a press table (7), and a drive device according to at least one of Claims 1 to 9.

## Revendications

1. Dispositif d'entraînement pour une presse mécanique, comprenant un moyen d'entraînement (2), par exemple un servomoteur, une transmission (3) et un frein d'arrêt (1), **caractérisé par** un frein d'arrêt (1), comprenant au moins
- une partie extérieure (11) avec une denture intérieure (111), ainsi qu'un dispositif d'entraînement intérieur (12) avec une denture extérieure (121),
- au moins un disque extérieur (13) avec une denture extérieure (131) ainsi qu'au moins un disque intérieur (14) avec une denture intérieure (141),
- la denture intérieure (141) du disque intérieur (14) étant en prise avec la denture extérieure (121) du dispositif d'entraînement intérieur (12) et la denture extérieure (131) du disque extérieur (13) étant en prise avec la denture intérieure (111) de la partie extérieure (11),
- le disque intérieur (14) présentant au moins une garniture de friction tournée vers le disque extérieur adjacent (13) et le disque extérieur (13) présentant au moins une garniture de friction tournée vers le disque intérieur adjacent (14),
- un moyen d'actionnement étant prévu, lequel est prévu pour comprimer, ou ne pas comprimer, de manière sélective, l'au moins un disque intérieur (14) et l'au moins un disque extérieur (15),
au moins l'une des dentures (111, 121, 131, 141) étant formée d'un matériau non métallique.

2. Dispositif d'entraînement pour une presse mécanique selon la revendication 1, **caractérisé en ce que** la denture (131) du disque extérieur (13) et/ou la denture (141) du disque intérieur (14) sont/est formée(s) d'un matériau non métallique.

3. Dispositif d'entraînement pour une presse mécanique selon au moins l'une quelconque des revendications précédentes, **caractérisé en ce que** la denture (111) de la partie extérieure (11) et/ou la denture (121) du dispositif d'entraînement intérieur (12) sont/est formée(s) d'un matériau non métallique.

4. Dispositif d'entraînement pour une presse mécanique selon au moins l'une quelconque des revendications précédentes, **caractérisé en ce que** le matériau non métallique comprend un matériau textile non métallique lié par de la résine, en particulier formé de celui-ci.

5. Dispositif d'entraînement pour une presse mécanique selon au moins l'une quelconque des revendications précédentes, **caractérisé en ce que** le disque extérieur (13) comprend un support circulaire (133) avec des faces latérales et une ouverture centrale (131), la garniture de friction étant appliquée au moins en partie sur au moins une surface latérale et la denture (132) étant disposée au niveau du bord du support (133).

6. Dispositif d'entraînement pour une presse mécanique selon au moins l'une quelconque des revendications précédentes, **caractérisé en ce que** le disque intérieur (14) comprend un support circulaire (143) avec des faces latérales et une ouverture centrale (141), la garniture de friction étant appliquée au moins en partie sur au moins une face latérale du support (143) et la denture (142) étant disposée au niveau du bord de l'ouverture (141).

7. Dispositif d'entraînement pour une presse mécanique selon au moins l'une quelconque des revendications précédentes, **caractérisé en ce que** la garniture de friction du disque extérieur (13) et/ou du disque intérieur (14) est formée d'une ou plusieurs tôles d'acier (134).

8. Dispositif d'entraînement pour une presse mécanique selon au moins l'une quelconque des revendications précédentes, **caractérisé en ce que** la garniture de friction du disque intérieur (14) et/ou du disque extérieur (13) est formée d'une garniture de friction organique (144).

9. Dispositif d'entraînement pour une presse mécanique selon au moins l'une quelconque des revendications précédentes, **caractérisé en ce que** le moyen d'actionnement comprend un élément d'actionnement (15) et une butée (154), l'élément d'actionnement (15) comprenant un piston déplaçable axialement (151), un espace de cylindre (152) et un agencement de ressort (153), les disques extérieurs (13) et les disques intérieurs (14) étant disposés entre le piston (151) et la butée (154), l'agencement de ressort (153) étant prévu pour presser le piston (151) dans la direction des disques extérieurs (13) et des disques intérieurs (14), l'agencement du piston (151) et de l'espace de cylindre (152) étant prévu pour déplacer le piston (151) à l'encontre de la force de l'agencement de ressort (153).

10. Presse mécanique comprenant au moins un bâti (6), un poussoir (5), une table de presse (7) et un dispositif d'entraînement selon au moins l'une quelconque des revendications 1 à 9.
